# FASCICULE DE BREVET EUROPEEN

(11) **EP 1 806 273 B1**
(45) Date de publication et mention de la délivrance du brevet: **06.08.2008**
(21) Numéro de dépôt: 07100130.9
(22) Date de dépôt: 04.01.2007
(51) Int. Cl.: B62D 25/20

(54) **Soubassement de véhicule automobile**
Bodenalage eines Kraftfahrzeuges
Vehicle bottom sub-unit

(30) Priorité: 10.01.2006 FR 0650081
(43) Date de publication de la demande: 11.07.2007
(73) Titulaire: PEUGEOT CITROËN AUTOMOBILES S.A., 78140 Vélizy Villacoublay (FR)
(72) Inventeur: Bourot, Frank, 90000 Belfort (FR)

(56) Documents cités:
- EP-A- 1 559 637
- EP-A- 1 602 523
- DE-A1- 3 403 764

## Description

La présente invention concerne un soubassement de véhicule automobile.

L'invention se rapporte plus précisément à un soubassement de véhicule automobile ayant une première et une seconde rangées d'assises, comprenant un plancher avant se prolongeant depuis son raccordement avec le tablier jusqu'à une zone située sensiblement sous la première rangée d'assise, ce plancher avant étant surplombé d'une traverse d'assise dans sa partie arrière, située sensiblement sous la première rangée d'assise.

A ce sujet, on peut, par exemple, citer le brevet EP 1 602 523, qui se rapporte à un véhicule automobile possédant un plancher avant et un plancher arrière surélevé par rapport au dit plancher avant : le dit document EP représente la base du preambule de la revendication 1

On sait qu'une très grande modularité est recherchée actuellement dans la construction des véhicules, notamment au niveau de leur soubassement (également désigné par le terme de plateforme), afin d'offrir une accessibilité accrue, un volume de rangement plus important, et bien entendu de reconduire un maximum de pièces entre différentes silhouettes pour limiter les coûts de fabrication. Le plancher du véhicule constitue une partie de ce soubassement et obéit donc nécessairement aux mêmes exigences de modularité.

Une construction connue de plancher de véhicule comporte une traverse d'assise unique intercalée entre le tunnel central du véhicule et le longeron latéral intérieur du véhicule. Une telle traverse d'assise a un rôle fondamental en cas de choc latéral sur le véhicule, en contribuant à la rigidité de la structure et à l'absorption du choc. Les extrémités de cette traverse d'assise sont encastrées dans deux longeronnets accolés de tout leur long, pour l'un contre le tunnel central, et pour l'autre contre le longeron latéral intérieur du véhicule.

Dans un véhicule de type « monospace », on réutilise classiquement le même soubassement que celui d'un véhicule de type « berline » après quelques modifications structurelles et aménagements. En particulier, le plancher est surélevé dans un véhicule monospace, ce qui implique en fait de disposer un faux plancher à distance du plancher principal en tôle. Une multitude de plots de maintien est donc disposée entre le plancher principal en tôle et le faux plancher.

Ce faux plancher est classiquement prévu sur toute la longueur du plancher depuis la remontée du plancher à l'avant vers la zone de tablier jusqu'à la zone dite « planche à talon » située légèrement au devant de la deuxième rangée d'assises. La partie du faux plancher située à l'avant de la traverse d'assise doit nécessairement être maintenue pour ne pas modifier la zone avant du soubassement conditionnée par l'intégration des brancards et aux autres éléments structurels de l'avant du véhicule.

En revanche, à l'arrière de la traverse d'assise, le faux plancher est source de surcoût et de masse accrue, tant au niveau du faux plancher lui-même que des plots de maintien.

La présente invention vise à résoudre les inconvénients précédents en proposant un soubassement de véhicule monospace présentant un coût et une masse limitée.

A cet effet, l'invention a pour objet un soubassement de véhicule automobile tel que défini dans la revendication 1.

Selon d'autres caractéristiques avantageuses de l'invention :
- une pluralité de plots de maintien est intercalée entre le plancher avant et le faux plancher,
- le faux plancher est appliqué directement sur le plancher arrière, dans la zone allant de la traverse d'assise jusqu'au relief de la planche à talon,
- les extrémités de la traverse d'assise sont encastrées dans deux longeronnets accolés de tout leur long, pour l'un contre un tunnel central du véhicule, et pour l'autre contre un longeron latéral intérieur du véhicule,
- les extrémités de la traverse d'assise traversent les longeronnets de part en part, de manière de manière que la traverse d'assise se trouve directement en appui contre le tunnel central et le longeron latéral intérieur,
- la traverse d'assise se prolonge à ses extrémités par des extensions de manière que la traverse d'assise présente la forme générale d'un I majuscule, ses extrémités étant en appui d'une part contre un tunnel central du véhicule, et d'autre part contre un longeron latéral intérieur du véhicule.

L'invention concerne également un véhicule automobile comportant un soubassement ayant les caractéristiques précédentes.

L'invention sera mieux comprise à la lecture de la description qui va suivre d'un mode de réalisation non limitatif de l'invention, et à l'aide des dessins annexés dans lesquels :
- la figure 1 représente un agencement connu de soubassement d'un véhicule automobile,
- la figure 2 représente une section d'un agencement connu de soubassement d'un véhicule automobile conforme à la figure 1 ,
- la figure 3 représente un agencement de soubassement d'un véhicule automobile selon l'invention,
- la figure 4 représente une section d'un agencement de soubassement d'un véhicule automobile selon la figure 3, sans faux plancher, et
- la figure 5 représente une section d'un agencement de soubassement d'un véhicule automobile selon la figure 3, avec un faux plancher.

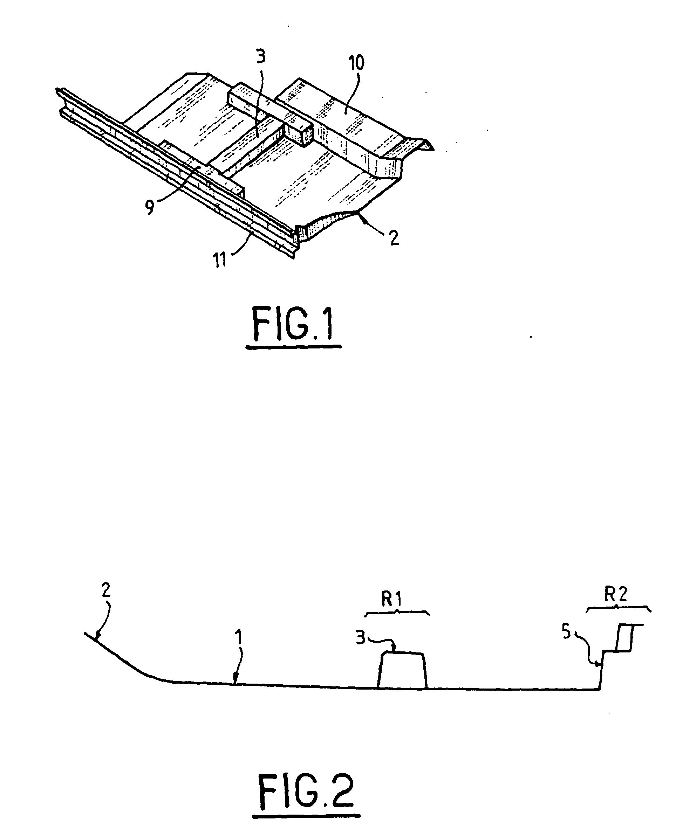

On a représenté à la figure 1 un agencement connu de soubassement d'un véhicule automobile conforme à l'énoncé de l'état de la technique introduit précédemment. Dans cette figure 1, l'avant du véhicule est situé en bas à droite et l'arrière en haut à gauche. Une traverse d'assise 3 unique est intercalée entre le tunnel central 10 du véhicule et le longeron latéral intérieur 11 du véhicule. Les extrémités de cette traverse d'assise 3 sont encastrées dans deux longeronnets 8, 9 accolés de tout leur long, pour l'un contre le tunnel central 10, et pour l'autre contre le longeron latéral intérieur 11 du véhicule.

On retrouve le même agencement sur la figure 2, illustrant une section d'un véhicule automobile dont l'avant est situé à gauche et l'arrière à droite. Sont également indiquées les zones correspond aux première R1 et seconde R2 rangées d'assises. La partie avant 2 du plancher 1 se raccorde au tablier (non représenté), tandis que la partie arrière se raccorde à un relief constitué par la « planche à talon » 5, et au-dessus de laquelle est positionnée la deuxième rangée d'assise R2.

Comme cela a été indiqué, une surélévation du plancher est nécessaire dans le cas de véhicule de type « monospace ».

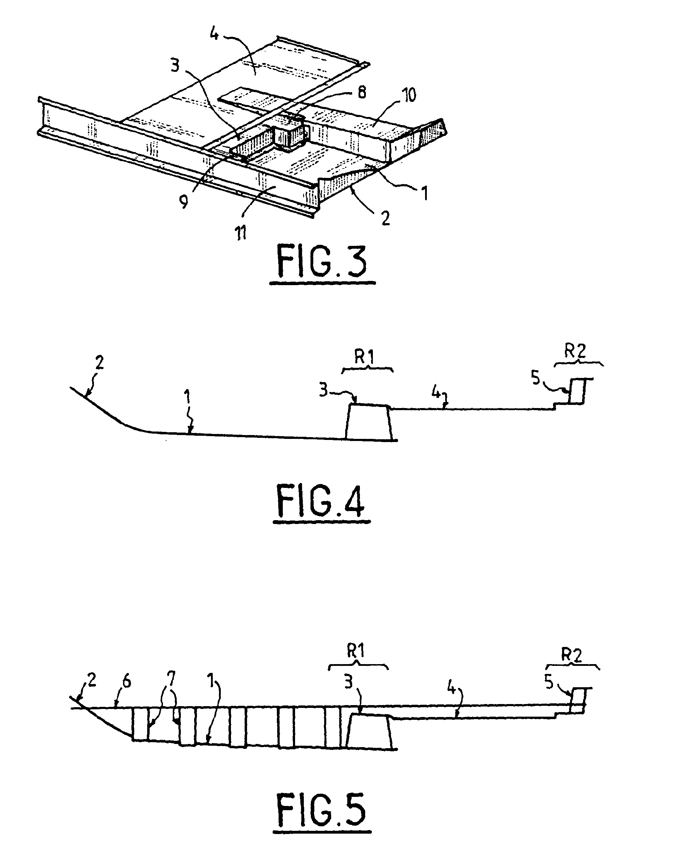

Ainsi selon l'invention illustrée aux figures 3 et 4, le soubassement comprend un plancher arrière 4 surélevé par rapport au plancher avant 1, et reliant le sommet de la traverse d'assise 3 à la planche à talon 5, située sensiblement au devant de la deuxième rangée d'assise R2.

Dans l'invention, le plancher avant 1 ne se prolonge donc pas au-delà de la traverse d'assise 3 vers l'arrière du véhicule, en dessous du plancher arrière 4.

Avantageusement, l'espace situé sous le plancher arrière 4 peut être utilisé pour loger des organes divers tels qu'un filtre à gasoil, un réservoir à volume augmenté par rapport à une solution de plancher classique à faux plancher, des réservoirs additionnels ou des calculateurs etc.

A l'avant de la traverse d'assise 4, un faux plancher 6 peut être maintenu, surplombant le plancher avant 1 entre le tablier et la traverse d'assise 3. Ce même faux plancher 6 peut être prolongé vers l'arrière de manière à recouvrir également le plancher arrière 4, jusqu'à la planche à talon 5 (figure 5). Le faux plancher 6 peut être appliqué directement par contact sur le plancher arrière 4. Un garnissage unique (non représenté) peut également recouvrir l'ensemble de ce faux plancher 6.

Entre le plancher avant 1 et le faux plancher 6 sont disposés des plots de maintien 7 formant des entretoises. Ainsi dans la partie avant, on conserve dans l'invention la possibilité de prévoir des volumes de rangements entre les plots de maintien.

Selon l'invention, le plancher avant 1 et le plancher arrière 4 sont réalisés dans des pièces de tôlerie.

L'invention ne se limite bien entendu pas au mode de réalisation qui vient d'être décrit mais comprend tous les équivalents techniques de ces moyens.

## Revendications

1. Soubassement de véhicule automobile ayant une première (R1) et une seconde (R2) rangées d'assises, comprenant un plancher avant (1) se prolongeant depuis son raccordement avec le tablier (2) jusqu'à une zone située sensiblement sous la première rangée d'assise (R1), ce plancher avant (1) étant surplombé d'une traverse d'assise (3) dans sa partie arrière, située sensiblement sous la première rangée d'assise (R1), et un plancher arrière (4) surélevé par rapport au plancher avant (1), ledit plancher (4) reliant le sommet de la traverse d'assise (3) à un relief dit « planche à talon » (5), située sensiblement au devant de la deuxième rangée d'assise (R2), le plancher avant (1) et le plancher arrière (4) étant réalisés dans des pièces de tôlerie, **caractérisé en ce que** le plancher avant (1) est surplombé d'un faux plancher (6), qui se prolonge vers l'arrière au dessus du plancher arrière (4), jusqu'au relief de la planche à talon.

2. Soubassement selon la revendication 1, **caractérisé en ce qu'**une pluralité de plots de maintien (7) est intercalée entre le plancher avant (1) et le faux plancher (6).

3. Soubassement selon la revendication 2, **caractérisé en ce que** le faux plancher (6) est appliqué directement sur le plancher arrière (4), dans la zone allant de la traverse d'assise (3) jusqu'au relief de la planche à talon (5).

4. Soubassement selon l'une quelconque des revendications précédentes, **caractérisée en ce que** les extrémités de la traverse d'assise (3) sont encastrées dans deux longeronnets (8 ; 9) accolés de tout leur long, pour l'un contre un tunnel central (10) du véhicule, et pour l'autre contre un longeron latéral intérieur (11) du véhicule.

5. Soubassement selon la revendication 4., **caractérisé en ce que** les extrémités de la traverse d'assise (3) traversent les longeronnets de part en part, de manière de manière que la traverse d'assise se trouve directement en appui contre le tunnel central (10) et le longeron latéral intérieur (11).

6. Soubassement selon l'une quelconque des revendications 1 à 3, **caractérisé en ce que** la traverse d'assise (3) se prolonge à ses extrémités par des extensions de manière que la traverse d'assise (3) présente la forme générale d'un I majuscule, ses extrémités étant en appui d'une part contre un tunnel (10) central du véhicule, et d'autre part contre un longeron latéral intérieur (11) du véhicule.

7. Véhicule automobile pourvu d'un soubassement selon l'une quelconque des revendications précédentes.

## Claims

1. Motor vehicle subframe having a first (R1) and a second (R2) row of seats, comprising a front floor (1) extending from its junction with the bulkhead (2) to a region situated substantially below the first seat row (R1), this front floor (1) being surmounted by a seat crossmember (3) in its rear part, which is situated substantially below the first seat row (R1), and a rear floor (4) which is raised with respect to the front floor (1), the said floor (4) connecting the top of the seat crossmember (3) to a relief known as a "heel board" (5) situated substantially in front of the second seat row (R2), the front floor (1) and the rear floor (4) being produced from sheet metal parts, **characterized in that** the front floor (1) is surmounted by a false floor (6) which extends rearwards above the rear floor (4) to the relief of the heel board.

2. Subframe according to Claim 1, **characterized in that** a plurality of retaining blocks (7) are interposed between the front floor (1) and the false floor (6).

3. Subframe according to Claim 2, **characterized in that** the false floor (6) is applied directly to the rear floor (4) in the region which ranges from the seat crossmember (3) to the relief of the heel board (5).

4. Subframe according to any one of the preceding claims, **characterized in that** the ends of the seat crossmember (3) are embedded in two auxiliary longitudinal members (8; 9), one of which is joined side on over its whole length against a central tunnel (10) of the vehicle, and the other of which is joined side on over its whole length against an inner lateral longitudinal member (11) of the vehicle.

5. Subframe according to Claim 4, **characterized in that** the ends of the seat crossmember (3) pass right through the auxiliary longitudinal members such that the seat crossmember bears directly against the central tunnel (10) and the inner lateral longitudinal member (11).

6. Subframe according to any one of Claims 1 to 3, **characterized in that** the seat crossmember (3) is prolonged at its ends by extensions such that the seat crossmember (3) has the general shape of a capital I, its ends bearing on the one hand against a central tunnel (10) of the vehicle and on the other hand against an inner lateral longitudinal member (11) of the vehicle.

7. Motor vehicle provided with a subframe according to any one of the preceding claims.

## Patentansprüche

1. Bodenanlage eines Kraftfahrzeugs mit einer ersten (R1) und einer zweiten (R2) Sitzreihe, die einen vorderen Fußboden (1), der sich von seiner Verbindung mit der Spritzwand (2) bis zu einem Bereich erstreckt, der sich im Wesentlichen unter der ersten Sitzreihe (R1) befindet, wobei dieser vordere Fußboden (1) in seinem hinteren Teil von einer Sitzquerstrebe (3) überragt wird, die sich im Wesentlichen unter der ersten Sitzreihe (R1) befindet, und einen hinteren Fußboden (4) umfasst, der im Verhältnis zum vorderen Fußboden (1) erhöht ist, wobei dieser Fußboden (4) den Scheitelpunkt der Sitzquerstrebe (3) mit einer als "Fersenbrett" bezeichneten Erhebung (5) verbindet, die sich im Wesentlichen vor der zweiten Sitzreihe (R2) befindet, wobei der vordere Fußboden (1) und der hintere Fußboden (4) aus Blechteilen hergestellt sind, **dadurch gekennzeichnet, dass** der vordere Fußboden (1) von einem falschen Fußboden (6) überragt wird, der sich von der Hinterseite über dem hinteren Fußboden (4) bis zur Erhebung des Fersenbretts erstreckt.

2. Bodenanlage nach Anspruch 1, **dadurch gekennzeichnet, dass** mehrere Haltekontakte (7) zwischen den vorderen Fußboden (1) und den falschen Fußboden (6) eingeschoben sind.

3. Bodenanlage nach Anspruch 2, **dadurch gekennzeichnet, dass** der falsche Fußboden (6) direkt auf dem hinteren Fußboden (4) in dem Bereich, der von der Sitzquerstrebe (3) bis zur Erhebung des Fersenbretts (5) reicht, angebracht ist.

4. Bodenanlage nach einem der vorhergehenden Ansprüche, **dadurch gekennzeichnet, dass** die Enden der Sitzquerstrebe (3) in zwei Holme (8; 9) eingepasst sind, die mit ihrer gesamten Länge, einer an einen zentralen Tunnel (10) des Fahrzeugs und der andere an einen seitlichen Innenholm (11) des Fahrzeugs, angefügt sind.

5. Bodenanlage nach Anspruch 4, **dadurch gekennzeichnet, dass** die Enden der Sitzquerstrebe (3) die Holme vollständig durchdringen, so dass die Sitzquerstrebe direkt auf dem zentralen Tunnel (10) und dem seitlichen Innenholm (11) aufliegt

6. Bodenanlage nach einem der Ansprüche 1 bis 3, **dadurch gekennzeichnet, dass** die Sitzquerstrebe (3) an ihren Enden durch Verlängerungen erweitert ist, so dass die Sitzquerstrebe (3) die allgemeine Form eines Großbuchstaben aufweist, wobei ihre Enden einerseits auf einem zentralen Tunnel (10) des Fahrzeugs und andererseits auf einem seitlichen Innenholm (11) des Fahrzeugs aufliegen.

7. Kraftfahrzeug, das mit einer Bodenanlage nach einem der vorhergehenden Ansprüche versehen ist.
